# FASCICULE DE BREVET EUROPEEN

(11) **EP 3 963 283 B1**
(45) Date de publication et mention de la délivrance du brevet: **20.09.2023**
(21) Numéro de dépôt: 20715088.9
(22) Date de dépôt: 03.04.2020
(51) Int. Cl.: G01B 11/00, G06T 7/00, G01N 21/88, G01N 21/95, G06V 10/28, G06V 10/98, G06F 18/21, G06F 18/2413

(54) **PROCEDE D'ENTRAINEMENT D'UN SYSTEME DE DETECTION AUTOMATIQUE DE DEFAUT D'UNE AUBE D'UNE TURBOMACHINE**
VERFAHREN ZUM TRAINIEREN EINES SYSTEMS ZUR AUTOMATISCHEN ERKENNUNG EINES FEHLERS IN EINER TURBOMASCHINENSCHAUFEL
METHOD FOR TRAINING A SYSTEM FOR AUTOMATICALLY DETECTING A DEFECT IN A TURBOMACHINE BLADE

(30) Priorité: 30.04.2019 FR 1904579
(43) Date de publication de la demande: 09.03.2022
(73) Titulaire: SAFRAN, 75015 Paris (FR)
(72) Inventeur: VOROBIEVA, Héléna, 77550 MOISSY-CRAMAYEL (FR); PICARD, Sylvaine, 77550 MOISSY-CRAMAYEL (FR)
(74) Mandataire: Cabinet Beau de Loménie
(86) Numéro de dépôt international: PCT/EP2020/059551
(87) Numéro de publication internationale: WO 2020/221550

(56) Documents cités:
- CN-A- 109 030 498
- US-A1- 2018 270 465
- US-A1- 2019 005 634

## Description

### Domaine Technique

L'invention concerne le contrôle non destructif d'une pièce aéronautique telle qu'une aube de turbine.

### Technique antérieure

Le contrôle des aubes d'une turbomachine pour la détection de défauts de surface tels que des petits coups, de la rugosité, des surplus de matière ou de la matière en moins à certains endroits, se fait généralement à la main par des opérateurs.

Une possibilité pour faire cette inspection est de placer l'aube à inspecter sur un support, de l'éclairer et de prendre des photos de bonne résolution. A partir de ces photos, il faut ensuite déterminer si un défaut est présent sur la surface l'aube. Des photos en niveaux de gris suffisent pour détecter les types de défauts cités précédemment.

Cependant, plusieurs problématiques se posent quant à la prise des photos pour avoir des photos en niveaux de gris permettant une comparaison et une détection d'éventuels défauts sur la surface de l'aube.

Premièrement, les aubes inspectées ont généralement un revêtement spéculaire et texturé. Par conséquent, si on éclaire l'aube avec une intensité suffisante pour que certains détails de revêtement soient visibles sur une partie de l'aube, d'autres parties de l'aube risquent d'être surexposées et les parties correspondantes sur l'image obtenue seront alors inutilisables. En outre, le relief formé par la texture du revêtement rend difficile voire impossible la détermination d'un éclairement optimal (des pixels proches dans l'image auront des comportements différents).

Deuxièmement, certaines aubes telles que les aubes de turbine ont une courbure non triviale. Ainsi, si on éclaire l'aube de turbine, certaines parties de l'aube seront dans l'ombre ce qui aura pour conséquence de rendre inutilisable les parties correspondantes sur l'image obtenue. De plus, étant donné que la courbure de l'aube est présente sur toutes les parties de l'aube, il n'est pas possible d'utiliser des techniques d'éclairage rasant.

Troisièmement, le revêtement des aubes peut varier légèrement. Cela implique qu'avec un éclairage identique et une position identique face au dispositif de prise de vue, les aubes vont apparaitre sur les images de manière différente, pouvant éventuellement être trop ou pas assez éclairées à un même emplacement de l'image.

Quatrièmement, même avec un système de positionnement précis, la précision ne pourra jamais être parfaite. Ce qui a pour conséquence que des images d'aubes différentes prises à des positions théoriquement identiques face au dispositif de prises de vue, ne sera pas strictement identique, entraînant du bruit dans le positionnement. Ce décalage amplifie les problèmes cités précédemment.

Par ailleurs, les images d'aubes prises à une résolution suffisante pour voir des défauts sont généralement des images en niveau de gris, c'est-à-dire dont les pixels prennent des valeurs entières entre 0 et 255, et présentant une texture assez chaotique de l'aube d'aspect non uni, ce qui signifie qu'une zone utilisable contient beaucoup de valeurs de pixels différentes, pouvant s'étaler de 0 à 255. Par zone utilisable, on entend une zone non floue et éclairée de manière à ce qu'un défaut soit visible.

Il est assez facile de délimiter des zones utiles sur chaque prise de vue, chaque prise de vue correspondant à une pose donnée de l'aube face au dispositif de prise de vue, et une zone utile étant une zone non floue et pour laquelle il est possible de régler l'éclairage de manière à ce que celui-ci soit correct, c'est-à-dire pas surexposé et pas trop sombre. Cependant, pour une photo donnée, le meilleur éclairage ne sera pas le même selon les zones utiles du fait de la géométrie et de la spécularité de l'aube. De plus, comme expliqué ci-dessus, le meilleur éclairage sur une zone donnée et une pose donnée n'est pas forcément le même d'une aube à l'autre. Par conséquent, l'éclairage des zones utiles n'est pas un paramètre qu'on pourrait fixer à la main.

Il est connu une méthode d'inspection de défauts de surface sur des objets dans laquelle des photos de l'objet sont prises sous une ou différentes illuminations, puis de choisir une ou des images qui posséderaient un défaut. Les images sont inspectées dans leur intégralité de manière à déterminer si elles possèdent des régions très éclairées ou dans l'ombre (ces régions sont alors caractéristiques d'un défaut) et de manière à voir des caractéristiques prédéfinies de défauts. Les images peuvent être comparées à des images de référence. Dans cette méthode, quelles que soient leurs conditions d'illumination, toutes les images subissent une première étape de traitement avec un premier filtre pour éliminer les images ne contenant pas de défaut. D'autres étapes suivent pour éliminer itérativement de plus en plus d'image.

Cependant, le traitement successif des images pour ne garder que les images ayant la meilleure illumination pour la tâche de détection de défaut avant de procéder à un quelconque filtrage par rapport aux défauts, représente un coût temporel important dans le traitement total pour la détection des défauts. En effet, le temps de calcul pour la tâche de détection de défauts est d'autant plus long.

De plus, La méthode connue réalise un chaque fois un traitement de l'image dans son intégralité.

Il est également connu une méthode d'inspection d'objets avec courbure. Dans cette méthode, deux sources lumineuses sont utilisées de manière à créer une lumière face à l'objet, dénommée « bright field illumination » en anglais, et une lumière rasante de l'objet, dénommée « dark field illumination » en anglais. Ces sources lumineuses peuvent bouger par rapport à l'objet. L'inspection pour trouver les défauts s'effectue alors à partir des images prises selon ces deux points de vue.

Cependant, avec des objets présentant une courbure non triviale, variant continûment autant selon la direction horizontale que verticale, il faudrait démultiplier les positions des sources lumineuses pour se trouver au bon angle par rapport à chaque petite zone.

De manière assez semblable à la méthode précédente, il est connu une méthode dans laquelle deux sources lumineuses, situées par rapport à un angle précis vis-à-vis de la surface à inspecter, se déplacent le long d'une ligne de scan pour capturer des sous-images et reconstituer une image finale à inspecter. Dans cette méthode, il n'y a donc pas besoin d'utiliser des intensités lumineuses différentes, l'intensité lumineuse utilisée est déjà optimale puisque l'angle d'incidence est optimal.

Cependant, une telle méthode serait inefficace avec des courbures non triviales des objets puisqu'il faudrait utiliser un nombre trop important de lignes de scan différentes.

Il est également connu du document CN109030498A un système d'inspection d'une turbine en utilisant plusieurs illuminations afin d'en détecter les défauts .

### Exposé de l'invention

L'invention vise à fournir un procédé automatique de choix du meilleur éclairage sur une zone donnée afin d'automatiser le contrôle de la surface d'une aube de turbomachine par méthode d'apprentissage, plus particulièrement à fournir un procédé d'entraînement d'un système de détection automatique de défaut d'une aube d'une turbomachine comprenant une plateforme destinée à recevoir une aube. Selon un objet de l'invention, il est proposé un procédé d'entraînement d'un système de détection automatique de défaut d'une aube d'une turbomachine tel que défini dans la revendication 1.

Le procédé selon l'invention comprend un prétraitement efficace permettant de sélectionner les sous-zones issues d'images prises au même endroit sous des intensités lumineuses différentes qui serviront par la suite à la détection d'anomalies. Ce prétraitement consiste tout d'abord à paramétriser les sous-zones selon le nombre de pixels contenus dans différents couples de bornes minimale et maximale. Lors de la phase de réglage, qui n'est à réaliser qu'une seule fois, le meilleur couple de bornes est choisi de manière à fournir les meilleurs performances possibles par rapport à l'algorithme de détection qui sera utilisé plus tard dans la chaine de traitement. Lors de la phase de chaine de production, la meilleure sous-zone est choisie directement par rapport à la borne fixée en réglage, ce qui est rapide et permet de ne pas démultiplier le nombre de sous-zones à tester en détection.

L'invention propose ainsi un procédé d'entraînement d'un système de détection automatique pour que le procédé de détection mis en oeuvre par ledit système ne garde que les images ayant la meilleure illumination pour la tâche de détection de défaut avant de procéder à un quelconque filtrage par rapport aux défauts, ce qui permet de gagner ainsi en temps de calcul pour la tâche de détection de défauts.

De plus, l'invention propose de traiter indépendamment des zones des images et pas forcément l'image entière.

De plus, le procédé permet d'éviter le repositionnement des sources lumineuses selon un angle particulier par rapport à l'objet, les images sont utilisables à partir du moment où avec l'une des intensités utilisées, la luminosité d'une zone est suffisante.

Avec l'invention, de larges zones peuvent être illuminées en une seule position de la source lumineuse ce qui permet de traiter les aubes présentant une courbure non triviale sans avoir à démultiplier les positions des sources lumineuses pour se trouver au bon angle par rapport à chaque petite zone.

Le couple de bornes sélectionné peut ainsi être choisi pour permettre ensuite de choisir, pour chaque sous-zone, une seule image parmi les différentes images disponibles prises avec des intensités différentes, en vues de futures étapes d'entrainement ou d'utilisation d'un système de détection automatique de défaut d'une aube.

Selon un premier aspect du procédé d'entraînement, si, à l'étape b, au moins deux images comprennent le même nombre de pixels, l'image de la sous-zone sélectionnée est celle dont la moyenne de l'intensité des pixels est la plus proche d'une intensité de 127,5.

Selon un deuxième aspect du procédé d'entraînement, le procédé peut en outre comprendre une génération d'images supplémentaires à partir des images issues des prises de vue pouvant être utilisées en plus des images d'intensités.

Selon un troisième aspect du procédé d'entraînement, les différentes intensités utilisées sont les mêmes pour chaque position relative distincte de la plateforme par rapport audit au moins un dispositif de prise de vue.

Selon un quatrième aspect du procédé d'entraînement, parmi toutes les sous-zones des zones utiles des aubes étudiées, il est possible d'utiliser autant de sous-zones sans défaut que de sous-zones présentant un défaut.

Il est ainsi possible de ne pas utiliser certaines sous-zones, afin que le nombre de sous-zones avec et sans défaut soit le même. S'il y a moins de sous-zones avec défaut, il est possible de choisir aléatoirement autant de sous-zones sans défaut parmi toutes les sous-zones sans défaut disponibles, qu'il y a de sous-zones avec défaut. S'il y a moins de sous-zones sans défaut, il est possible de choisir aléatoirement autant de sous-zones avec défaut parmi toutes les sous-zones avec défaut disponibles, qu'il y a de sous-zones sans défaut. Un autre nombre de sous-zones peut également être choisi. Pour cet aspect du procédé d'entraînement, on peut procéder aube par aube ou toutes aubes confondues.

Dans un autre objet de l'invention, il est proposé un système de détection automatique de défaut d'une aube d'une turbomachine comprenant une plateforme destinée à recevoir une aube, au moins un moyen de prise de vue, au moins une source lumineuse dont l'intensité lumineuse peut varier, au moins un moyen de déplacement configuré pour déplacer la plateforme par rapport audit au moins un moyen de prise de vue ou pour déplacer ledit au moins un moyen de prise de vue par rapport à la plateforme, et une unité de traitement configurée pour recevoir des prises de vue et les associer aux informations relatives à l'intensité lumineuse de ladite au moins une source lumineuse et à la position relative de la plateforme par rapport audit au moins un dispositif de prise de vue lors de la prise de vue, une pluralité de prises de vues étant réalisées pour chacune desdites positions relatives avec, pour chaque prise de vue, une intensité lumineuse de ladite au moins une source lumineuse.

Selon une caractéristique générale de l'invention, l'unité de traitement est configurée pour définir une zone utile sur l'aube, diviser l'image issue de la prise de vue d'une zone utile en une pluralité de sous-zones, et traiter chaque sous-zone.

Selon un aspect du système de détection automatique, pour traiter chaque sous-zone, l'unité de traitement peut être configurée pour qu'une seule image de sous-zone soit choisie parmi la pluralité des images avec des intensités lumineuses ou parmi la pluralité des images supplémentaires générées à partir des images issues des prises de vue, ce choix s'effectuant grâce à un couple de bornes prédéfini, selon les étapes suivantes :
a. une détermination du nombre de pixels contenus dans chacune des images de la sous-zone ayant une intensité comprise entre l'intensité minimale et l'intensité maximale du couple de bornes, puis
b. une sélection d'une seule image pour chaque sous-zone à une position relative donnée, l'image sélectionnée correspondant à l'image comprenant le plus de pixels dont l'intensité est comprise entre lesdites intensités minimale et maximale du couple de bornes.

### Brève description des dessins

[Fig. 1] La figure 1 est une représentation schématique d'un système de détection automatique de défaut d'une aube d'une turbomachine selon un mode de réalisation de l'invention.
[Fig. 2] La figure 2 représente un organigramme d'un procédé d'entraînement du système de détection automatique de défaut d'une aube d'une turbomachine de la figure 1 selon un mode de mise en oeuvre de l'invention.

### Description des modes de réalisation

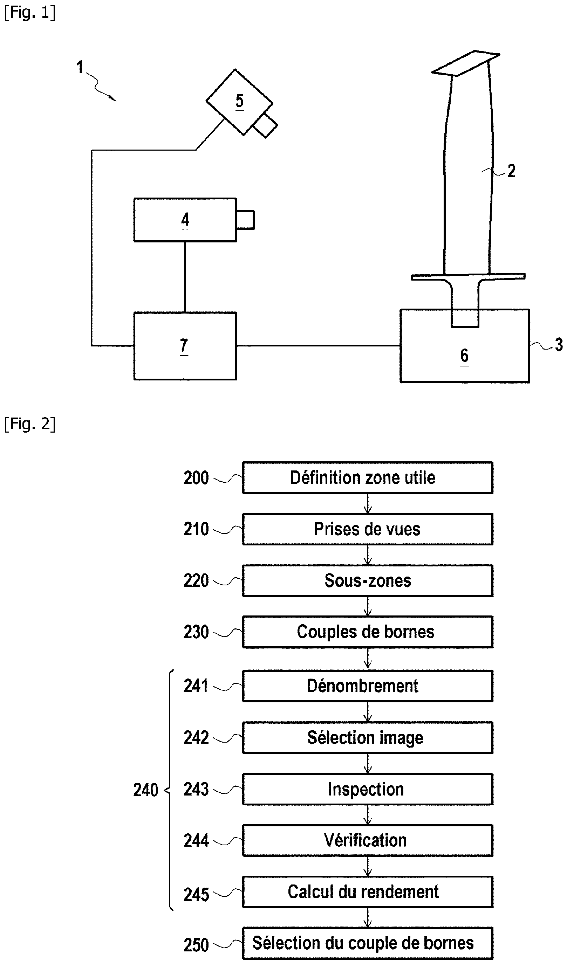

Sur la figure 1 est représenté schématiquement un système de détection automatique de défaut d'une aube d'une turbomachine.

Le système 1 de détection automatique de défaut d'une aube 2 d'une turbomachine comprend une plateforme 3 mobile sur laquelle est placée l'aube 2 à étudier, un appareil photographique 4 fixe et une source lumineuse 5 fixe et dont l'intensité lumineuse peut varier. L'aube 2 est posée sur la plateforme 3 verticalement. En d'autres termes, l'aube 2 comprend un pied d'aube 22, une pale 24 et une tête d'aube 26, la pale 24 s'étendant entre le pied 22 et la tête 26, et le pied 22 repose sur la plateforme 3 de manière à ce que la pale 24 s'étende dans une direction orthogonale à la surface de la plateforme 3 sur laquelle repose le pied d'aube 22, ladite direction orthogonale correspondant à la direction verticale.

Dans le mode de réalisation illustré sur la figure 1, la plateforme 3 est mobile et peut se déplacer par rapport à l'appareil photographique 4 et à la source lumineuse 5 qui restent tous les deux à des positions fixes grâce à des moyens de déplacement 6 inclus dans la plateforme 3. Afin de prendre des images autour de l'aube 2, la plateforme 3 peut pivoter sur elle-même autour d'un axe de rotation et se déplacer verticalement et horizontalement.

Le système 1 de détection comprend en outre une unité de traitement 7 couplée à la plateforme 3, à l'appareil photographique 4 et à la source lumineuse 5. L'unité de traitement 7 est configurée pour recevoir des prises de vue transmises par l'appareil photographique 4 et les associer aux informations relatives à l'intensité lumineuse de la source lumineuse 5 et à la position de la plateforme lors de la prise de vue.

Sur la figure 2 est présenté schématiquement un organigramme d'un procédé d'entraînement mis en oeuvre par le système de détection automatique de défaut d'une aube d'une turbomachine de la figure 1 pour optimiser son fonctionnement lors d'une recherche de défaut opérée sur une aube inconnue.

Pour entraîner le système de détection 1, on utilise un jeu d'aubes connues dont les défauts sont connus et ont déjà été repérés et enregistrés dans l'unité de traitement 7.

Pour chacune des aubes à étudier du jeu d'aubes, le procédé d'entraînement réalise les étapes suivantes.

Dans une première étape 200, l'appareil photographique 4, la source lumineuse 5 et la plateforme 3 sont réglés pour réaliser des prises de vue permettant de couvrir toute l'aube 2 par des zones utiles. Sur chaque prise de vue ainsi réalisée, les zones utiles sont délimitées.

Dans une étape suivante 210, on réalise, pour chaque position de la plateforme 3, une pluralité de prises de vue de chaque zone utile de l'aube 2 à l'aide de l'appareil photographique 4, chaque prise de vue pour une même position de la plateforme 3 étant réalisée avec une intensité lumineuse différente de la source lumineuse 5. Le système 1 de détection peut être configuré pour réaliser un même nombre de prises de vue pour chaque position, par exemple vingt prises de vue pour une même position de la plateforme 3, avec une intensité différente à chaque prise de vue. On a donc, pour chaque position de la plateforme 3, une vingtaine de prises de vue de la zone utile de l'aube 2 à étudier chacune avec une intensité différente, c'est-à-dire vingt intensités lumineuses différentes.

Dans une étape suivante 220, chaque prise de vue réalisée par l'appareil photographique 4 est transmise à l'unité de traitement qui divise l'image issue de la prise de vue en une pluralité d'images de sous-zones.

Dans une étape suivante 230, on renseigne une pluralité de couple de bornes d'intensité de pixel, chaque couple comprenant une intensité minimale et une intensité maximale.

Puis, on détermine, dans une étape 240, le couple de bornes le plus performant en réalisant les étapes suivantes pour chaque couples de bornes.

Dans une première sous étape 241, pour chacune des images d'une sous-zone, on détermine le nombre de pixels contenu dans l'image et ayant une intensité comprise entre l'intensité minimale et l'intensité maximale du couple de bornes.

Puis, on sélectionne, dans une deuxième sous-étape 242, une seule image parmi les différentes images, prises avec différentes intensités lumineuses, d'une même sous-zone à une position de la plateforme 3 donnée. L'image sélectionnée correspond à l'image comprenant le plus de pixels dont l'intensité est comprise entre lesdites intensités minimale et maximale du couple de bornes. Si, au moins deux images comprennent le même nombre de pixels, l'image de la sous-zone sélectionnée est celle dont la moyenne de l'intensité des pixels est la plus proche d'une intensité de 127,5.

Puis, dans une troisième sous-étape 243, pour chaque position de la plateforme 3, on inspecte chaque sous-zone à l'aide d'un réseau de neurones convolutionnels de classification pour détecter l'éventuelle présence d'un défaut.

Puis, dans une quatrième sous-étape 244, on compare les détections réalisées par le réseau de neurones convolutionnels de classification à une table enregistrée localisant les défauts connus de l'aube pour déterminer si les défauts détectés sont réels ou faux.

Dans une cinquième sous-étape 245, on calcule ensuite un rendement de détection pour le couple de bornes donné sur la zone utile en prenant toutes les positions de la plateforme 3. Le rendement de détection dépend du rapport entre le nombre de détections avérées et le nombre de fausses détections.

Enfin, dans une étape 250, on sélectionne le couple de bornes présentant le meilleur rendement de détection.

L'invention fournit ainsi un procédé d'entraînement d'un système de détection automatique de défaut d'une aube d'une turbomachine comprenant une plateforme destinée à recevoir une aube, pour automatiser le contrôle de la surface d'une aube de turbomachine par méthode d'apprentissage.

## Revendications

1. Procédé d'entraînement d'un système (1) de détection automatique de défaut d'une aube (2) d'une turbomachine comprenant une plateforme (3) destinée à recevoir une aube, au moins un moyen de prise de vue (4), au moins une source lumineuse (5) dont l'intensité lumineuse peut varier, au moins un moyen de déplacement (6) configuré pour déplacer la plateforme (3) par rapport audit au moins un moyen de prise de vue (4) ou pour déplacer ledit au moins un moyen de prise de vue (4) par rapport à la plateforme (3), et une unité de traitement (7) configurée pour recevoir des prises de vue et les associer aux informations relatives à l'intensité lumineuse de ladite au moins une source lumineuse (5) et à la position relative de la plateforme (3) par rapport audit au moins un dispositif (4) de prise de vue lors de la prise de vue, le procédé d'entraînement comprenant, pour chacune des aubes (2) à étudier un ensemble d'aubes dont les défauts de surface sont déjà identifiés, les étapes suivantes :
- une définition (200) de zones utiles sur l'aube,
- une réalisation (210), pour chaque position relative distincte de la plateforme par rapport audit au moins un dispositif de prise de vue, d'une pluralité de prises de vue de la zone utile de l'aube, chacune des prises de vue pour une même position relative étant réalisée avec une intensité lumineuse différente,
- une division (220) de chaque image de la zone utile issue d'une prise de vue en une pluralité d'images de sous-zones,
- une détermination (230) d'une pluralité de couple de bornes d'intensité de pixel, chaque couple comprenant une intensité minimale et une intensité maximale,
- pour chaque couple de bornes :
a. pour chaque sous-zone de zone utile, une détermination (241) du nombre de pixels contenus dans chacune des images de la sous-zone ayant une intensité comprise entre l'intensité minimale et l'intensité maximale du couple de bornes, puis
b. pour chaque position relative donnée, pour chaque sous-zone de ladite position relative, une sélection (242) d'une seule image, l'image sélectionnée correspondant à l'image comprenant le plus de pixels dont l'intensité est comprise entre lesdites intensités minimale et maximale du couple de bornes, puis
c. pour chaque position relative donnée, pour chaque sous-zone, une inspection (243) de chaque image sélectionnée correspondante pour cette sous-zone par un réseau de neurones convolutionnels de classification pour détecter l'éventuelle présence d'un défaut, puis
d. une vérification (244) des détections réalisées par le réseau de neurones convolutionnels de classification pour déterminer si les défauts détectés sont réels ou faux, et
e. un calcul (245) du rendement de détection pour le couple de bornes donné sur la zone utile à partir de toutes les positions relatives données, le rendement de détection dépendant du rapport entre le nombre de détections avérées et le nombre de fausses détections,
- une sélection (250) du couple de bornes présentant le meilleur rendement de détection.

2. Procédé selon la revendication précédente, dans lequel si, à l'étape b, au moins deux images comprennent le même nombre de pixels, l'image de la sous-zone sélectionnée est celle dont la moyenne de l'intensité des pixels est la plus proche d'une intensité de 127,5.

3. Procédé selon l'une des revendications précédentes, comprenant en outre une génération d'images supplémentaires à partir des images issues des prises de vue pouvant être utilisées en plus des images d'intensités.

4. Procédé selon l'une des revendications précédentes, dans lequel les différentes intensités utilisées sont les mêmes pour chaque position relative distincte de la plateforme par rapport audit au moins un dispositif de prise de vue.

5. Procédé selon l'une des revendications 1 à 4, dans lequel sont choisies, parmi toutes les sous-zones des zones utiles des aubes étudiées, autant de sous-zones sans défaut que de sous-zones présentant un défaut.

## Patentansprüche

1. Verfahren zum Trainieren eines Systems (1) zur automatischen Erkennung von Fehlern an einer Schaufel (2) einer Turbomaschine, das eine Plattform (3) zur Aufnahme einer Schaufel, zumindest ein Mittel zur Bildaufnahme (4), zumindest eine Lichtquelle (5), deren Lichtintensität variiert werden kann, und zumindest ein Mittel zur Verschiebung (6) umfasst, das dazu ausgestaltet ist, die Plattform (3) in Bezug auf das zumindest eine Mittel zur Bildaufnahme (4) zu bewegen oder das zumindest eine Mittel zur Bildaufnahme (4) in Bezug auf die Plattform (3) zu bewegen, und eine Verarbeitungseinheit (7), die dazu ausgestaltet ist, die Bildaufnahmen zu empfangen und ihnen Informationen in Bezug auf die Lichtintensität der zumindest einen Lichtquelle (5) und die relative Position der Plattform (3) in Bezug auf die zumindest eine Vorrichtung (4) zur Bildaufnahme während der Bildaufnahme zuzuordnen, wobei das Trainingsverfahren für jede der zu untersuchenden Schaufeln (2) aus einer Anordnung von Schaufeln, deren Oberflächenfehler bereits identifiziert sind, die folgenden Schritte umfasst:
- eine Definition (200) von Nutzbereichen auf der Schaufel,
- eine Ausführung (210), für jede distinkte relative Position der Plattform in Bezug auf die zumindest eine Vorrichtung zur Bildaufnahme, einer Vielzahl von Bildaufnahmen der Nutzzone der Schaufel, wobei jede der Bildaufnahmen für dieselbe relative Position mit einer unterschiedlichen Lichtintensität ausgeführt wird,
- eine Einteilung (220) eines jeden Bildes der Nutzzone, das aus einer Bildaufnahme resultiert, in eine Vielzahl von Bildern von Teilzonen,
- eine Bestimmung (230) einer Vielzahl von Paaren von Pixelintensitätsgrenzwerten, wobei jedes Paar eine minimale Intensität und eine maximale Intensität umfasst,
- für jedes Paar von Grenzwerten:
a. für jede Teilzone der Nutzzone eine Bestimmung (241) der Anzahl der Pixel, die in jedem der Bilder der Teilzone enthalten sind und eine Intensität zwischen der minimalen Intensität und der maximalen Intensität des Paars von Grenzwerten aufweisen, anschließend
b. für jede gegebene relative Position, für jede Teilzone der relativen Position, eine Auswahl (242) eines einzigen Bildes, wobei das ausgewählte Bild jenem Bild entspricht, das die meisten Pixel umfasst, deren Intensität zwischen der minimalen und maximalen Intensität des Paars von Grenzwerten liegt, anschließend
c. für jede gegebene relative Position, für jede Teilzone, eine Überprüfung (243) eines jeden entsprechenden ausgewählten Bildes für diese Teilzone durch ein neuronales Faltungsnetzwerk zur Klassifikation, um das eventuelle Vorliegen eines Fehlers zu erkennen, anschließend
d. eine Verifikation (244) der durch das neuronale Faltungsnetzwerk zur Klassifikation ausgeführten Erkennungen, um festzustellen, ob die erkannten Fehler tatsächliche oder falsche sind, und
e. eine Berechnung (245) der Erkennungsleistung für das gegebene Paar von Grenzwerten an der Nutzzone ausgehend von allen gegebenen relativen Positionen, wobei die Erkennungsleistung von dem Verhältnis zwischen der Anzahl von bestätigten Erkennungen und der Anzahl von falschen Erkennungen abhängig ist,
- eine Auswahl (250) jenes Paars von Grenzwerten, das die beste Erkennungsleistung aufweist.

2. Verfahren nach dem vorhergehenden Anspruch, wobei, wenn in Schritt b zumindest zwei Bilder dieselbe Anzahl von Pixeln umfassen, das ausgewählte Bild der Teilzone jenes ist, dessen Mittelwert der Intensität der Pixel einer Intensität von 127,5 am nächsten kommt.

3. Verfahren nach einem der vorhergehenden Ansprüche, ferner umfassend eine Erzeugung von zusätzlichen Bildern ausgehend von den Bildern, die aus den Bildaufnahmen resultieren, die zusätzlich zu den Intensitätsbildern verwendet werden können.

4. Verfahren nach einem der vorhergehenden Ansprüche, wobei die verschiedenen verwendeten Intensitäten für jede distinkte relative Position der Plattform in Bezug auf die zumindest eine Vorrichtung zur Bildaufnahme dieselben sind.

5. Verfahren nach einem der Ansprüche 1 bis 4, wobei unter allen Teilzonen der Nutzzonen der untersuchten Schaufeln gleich viele Teilzonen ohne Fehler wie Teilzonen, die einen Fehler aufwiesen, gewählt werden.

## Claims

1. A method for training a system (1) for automatically detecting a defect of a blade (2) of a turbomachine comprising a platform (3) intended to receive a blade, at least one image-acquiring means (4), at least one light source (5) the luminous intensity of which may vary, at least one moving means (6) configured to move the platform (3) with respect to said at least one image-acquiring means (4) or to move said at least one image-acquiring means (4) with respect to the platform (3), and a processing unit (7) configured to receive acquired images and associate them with the items of information relating to the luminous intensity of said at least one light source (5) and to the relative position of the platform (3) with respect to said at least one image-acquiring device (4) during the image acquisition, the training method comprising, for each of the blades (2) to be studied a set of blades with surface defects that have already been identified, the following steps:
- defining (200) useful areas on the blade,
- producing (210), for each separate relative position of the platform with respect to said at least one image-acquiring device, a plurality of acquired images of the useful area of the blade, each of the acquired images for one and the same relative position being produced with a different luminous intensity,
- dividing (220) each image of the useful area from one acquired image into a plurality of images of sub-areas,
- determining (230) a plurality of pairs of pixel intensity bounds, each pair comprising a minimum intensity and a maximum intensity,
- for each pair of bounds:
a. for each sub-area of a useful area, determining (241) the number of pixels contained in each of the images of the sub-area having an intensity between the minimum intensity and the maximum intensity of the pair of bounds, then
b. for each given relative position, for each sub-area of said relative position, selecting (242) a single image, the selected image corresponding to the image comprising the most pixels, the intensity of which is between said minimum and maximum intensities of the pair of bounds, then
c. for each given relative position, for each sub-area, inspecting (243) each corresponding selected image for this sub-area by a classifying convolutional neural network to detect the presence of any defects, then
d. checking (244) the detections made by the classifying convolutional neural network to determine whether the detected defects are real or false, and
e. computing (245) the detection efficiency for the given pair of bounds over the useful area on the basis of all the given relative positions, the detection efficiency depending on the ratio of the number of proven detections to the number of false detections,
- selecting (250) the pair of bounds having the best detection efficiency.

2. The method as claimed in the preceding claim, wherein if, in step b, at least two images comprise the same number of pixels, the image of the sub-area selected is that for which the average of the pixel intensities is the nearest to an intensity of 127.5.

3. The method as claimed in one of the preceding claims, further comprising the generation of additional images on the basis of images from these acquisitions that can be used in addition to the intensity images.

4. The method as claimed in one of the preceding claims, wherein the different intensities used are the same for each separate relative position of the platform with respect to said at least one image-acquiring device.

5. The method as claimed in one of claims 1 to 4, wherein are chosen, from among all the sub-areas of the useful areas of the studied blades, as many sub-areas without defects as there are sub-areas having a defect.
